# FASCICULE DE BREVET EUROPEEN

(11) **EP 1 427 599 B1**
(45) Date de publication et mention de la délivrance du brevet: **09.03.2005**
(21) Numéro de dépôt: 02798764.3
(22) Date de dépôt: 13.09.2002
(51) Int. Cl.: B60K 41/00

(54) **MOYENS DE COMMANDE POUR UNE TRANSMISSION A DERIVATION DE PUISSANCE**
STEUERMITTEL FÜR LEISTUNGSVERZWEIGUNGSGETRIEBE
CONTROL MEANS FOR POWER BYPASS TRANSMISSION

(30) Priorité: 17.09.2001 FR 0111976
(43) Date de publication de la demande: 16.06.2004
(73) Titulaire: Renault s.a.s., 92100 Boulogne Billancourt (FR)
(72) Inventeur: PICHON, Yves, F-92100 Boulogne Billancourt (FR); ROUDEAU, Frédéric, F-94400 Vitry sur Seine (FR); KETFI-CHERIF, Ahmed, F-78190 Trappes (FR); VON-WISSEL, Dirk, F-92200 Neuilly-sur-Seine (FR); ROYER, Laurent, F-92120 Montrouge (FR)
(86) Numéro de dépôt international: PCT/FR2002/003127
(87) Numéro de publication internationale: WO 2003/024735

(56) Documents cités:
- DE-A- 10 005 581
- DE-A- 10 038 947
- DE-A- 19 816 450
- DE-A- 19 860 645

## Description

L'invention concerne un groupe motopropulseur de véhicule automobile.

L'invention concerne plus particulièrement un groupe motopropulseur de véhicule automobile selon le préambule de la revendication 1 comme connu par exemple par DE-A-10005581.

La technologie des groupes motopropulseurs comportant des moyens de dérivation de puissance mettant en oeuvre des machines électriques est une technologie récente.

Du fait du nombre réduit de configurations qui ont été envisagées à ce jour, les moyens de commande de tels groupes motopropulseurs, qui ne prennent en compte que très peu de variables, ne permettent pas de gérer efficacement les puissances échangées entre les différents éléments du groupe motopropulseur.

De ce fait, la capacité qui relie les deux machines électriques est généralement surdimensionnée pour pouvoir absorber les variations de tension des machines électriques.

Cette configuration pénalise notablement en termes de poids et d'encombrement un véhicule équipé d'une telle transmission à dérivation de puissance.

L'invention propose de remédier à cet inconvénient en définissant les paramètres appropriés susceptibles d'être utilisés par les moyens de commande de tels groupes motopropulseurs.

Dans ce but, l'invention propose un groupe motopropulseur de véhicule automobile du type décrit précédemment, caractérisé en ce qu'il comporte des moyens de commande à deux niveaux primaire et secondaire, qui comportent une unité primaire de calcul, qui est susceptible, au moins en réponse à une information représentative de la position d'une pédale d'accélérateur du véhicule, d'émettre au moins une consigne primaire du couple fourni par le groupe motopropulseur et une consigne primaire du régime du moteur. à l'intention d'une unité secondaire de commande qui est susceptible d'émettre une consigne secondaire de couple à l'intention du moteur et au moins une consigne secondaire de pilotage à l'intention des moyens de dérivation de puissance, de manière à satisfaire aux consignes primaires.

Selon d'autres caractéristiques de l'invention :
- l'unité primaire de calcul comporte au moins un module d'analyse du comportement du conducteur et un module de détermination du point de fonctionnement du groupe motopropulseur,
- l'unité secondaire de commande est asservie aux moyens de dérivation de puissance,
- la consigne secondaire de pilotage qu'émet l'unité secondaire de commande à l'intention des moyens de dérivation de puissance comporte une consigne de pilotage d'un variateur unique interposé entre les première et seconde machines électriques,
- le variateur est susceptible de transmettre à l'unité secondaire de commande des informations représentatives des couple et vitesse réels des première et seconde machine électriques pour réaliser l'asservissement de l'unité secondaire de commande,
- la consigne secondaire de pilotage qu'émet l'unité secondaire de commande à l'intention des moyens de dérivation de puissance comporte une première consigne de pilotage d'un premier variateur associé à la première machine électrique et une seconde consigne de pilotage d'un second variateur associé à la seconde machine électrique,
- chaque machine électrique est susceptible d'émettre directement à l'intention de l'unité secondaire de commande une information représentative des couple et vitesse réels la concernant pour réaliser l'asservissement de l'unité secondaire de commande,
- la capacité est susceptible d'émettre directement à l'intention de l'unité secondaire de commande une information représentative de la tension et/ou de l'intensité établie dans la capacité pour réaliser l'asservissement de l'unité secondaire de commande,
- la consigne secondaire de couple qu'émet l'unité secondaire de commande à l'intention du moteur comporte une consigne d'allumage et/ou une consigne d'alimentation en carburant,
- les moyens de réduction à engrenages comportent au moins un train épicycloïdal.

D'autres caractéristiques et avantages de l'invention apparaîtront à la lecture de la description détaillée qui suit pour la compréhension de laquelle on se reportera aux dessins annexés dans lesquels :
- la figure 1 est un schéma de principe d'un premier mode de réalisation des moyens de commande du groupe motopropulseur objet de l'invention ; et
- la figure 2 est un schéma de principe d'un second mode de réalisation, préféré, des moyens de commande du groupe motopropulseur objet de l'invention.

Dans la description qui va suivre, des chiffres de référence identiques désignent des éléments identiques.

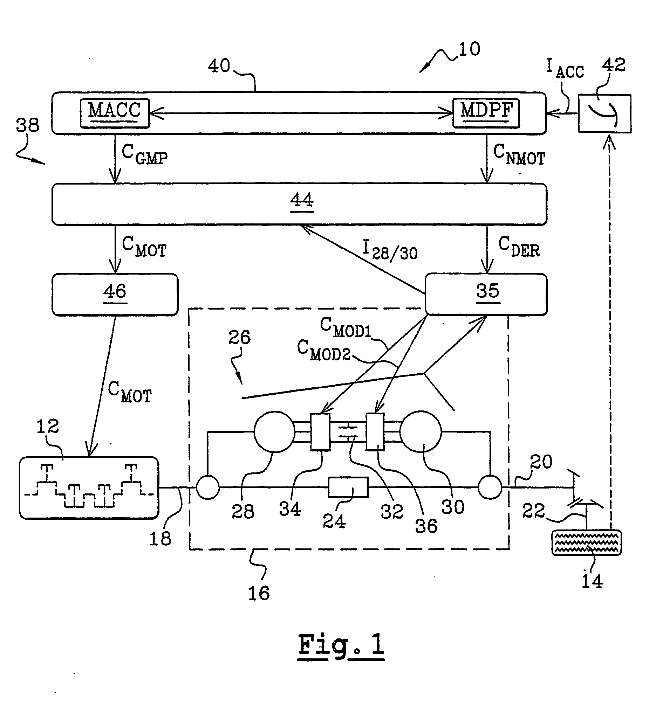

On a représenté de manière schématique à la figure 1 l'ensemble d'un groupe motopropulseur 10 de véhicule automobile.

De manière connue, le groupe motopropulseur 10 comporte un moteur thermique 12 entraînant au moins une roue 14 du véhicule par l'intermédiaire d'une transmission 16 à dérivation de puissance. Cette transmission 16 comporte un arbre d'entrée 18 qui est accouplé au moteur 12 du véhicule, un arbre de sortie 20 entraînant un pont 22 lié en rotation aux roues 14, des moyens 24 de réduction à engrenages interposés entre l'arbre d'entrée 18 et l'arbre de sortie 20 de la transmission, et des moyens 26 de dérivation de puissance.

De manière connue, les moyens 26 de dérivation de puissance sont interposés entre l'arbre d'entrée 18 et l'arbre 20 de sortie de la transmission parallèlement aux moyens 24 de réduction à engrenages, et ils comportent une première machine électrique 28, liée mécaniquement en rotation à l'arbre d'entrée 18, et une seconde machine électrique 30 liée mécaniquement en rotation à l'arbre de sortie 20, qui sont reliées électriquement par l'intermédiaire d'une capacité 32 et d'au moins un variateur.

Plus particulièrement, chaque machine électrique 28, 30 comporte un module électronique de gestion associé 34, 36 et la capacité 32 est agencée entre les modules électroniques de gestion 34, 36.

Selon le premier mode de réalisation qui a été représenté à la figure 1, les deux modules 34, 36 électroniques de gestion sont associés à un variateur unique 35 qui est susceptible d'être piloté pour contrôler le fonctionnement des deux machines électriques 28, 30.

Selon le second mode de réalisation qui a été représenté à la figure 1, chaque module 34, 36 électronique de gestion est associé à un variateur indépendant 37, 39 qui est susceptible d'être piloté de manière indépendante pour contrôler le fonctionnement des deux machines électriques 28, 30.

Conformément à l'invention, le groupe motopropulseur 10 comporte des moyens 38 de commande à deux niveaux primaire et secondaire, qui comportent une unité 40 primaire de calcul, qui est susceptible, au moins en réponse à une information I_{ACC} représentative de la position d'une pédale 42 d'accélérateur du véhicule, d'émettre au moins une consigne C_{GMP} primaire du couple devant être fourni par le groupe motopropulseur 10 et une consigne C_{NMOT} primaire du régime auquel doit fonctionner le moteur 12 à l'intention d'une unité 44 secondaire de commande qui est susceptible d'émettre une consigne C_{MOT} secondaire de couple à l'intention du moteur 12 et au moins une consigne C_{DER} secondaire de pilotage à l'intention des moyens 26 de dérivation de puissance, de manière à satisfaire aux consignes primaires C_{GMP} et. C_{NMOT}.

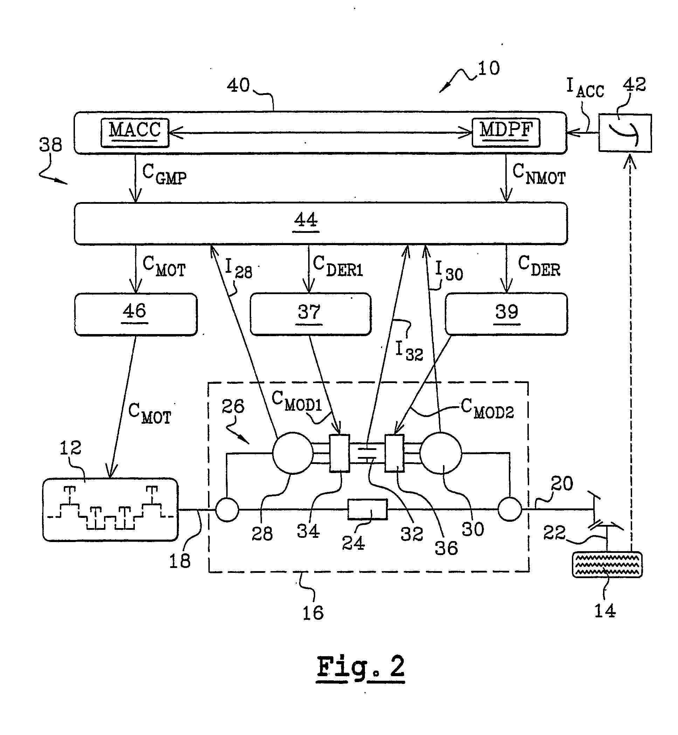

Il sera compris que la position d'une pédale 42 d'accélérateur du véhicule résulte est asservie naturellement par le conducteur au couple réel ressenti à la roue, comme représenté par la flèche en pointillés des figures 1 et 2.

Ainsi, dans le premier mode de réalisation qui est représenté à la figure 1, l'unité 44 secondaire de commande émet une unique consigne C_{DER} secondaire de pilotage à l'intention du variateur 35 qui pilote les deux modules 34, 36 électroniques de gestion des deux machines électriques 28, 30. Le variateur 35 émet une consigne C_{MOD1}, issue de la consigne C_{DER}, à l'intention du module 34 électronique de la première machine électrique 28 et une consigne C_{MOD2}, elle aussi issue de la consigne C_{DER}, à l'intention du module 36 électronique de la seconde machine électrique 28.

Dans le second mode de réalisation qui est représenté à la figure 2, l'unité 44 secondaire de commande émet respectivement deux consignes C_{DER1} et C_{DER2} secondaires de pilotage à l'intention de chaque variateur 37, 39 qui pilote chaque module 34, 36 électroniques de gestion associé à chaque machine électrique 28, 30.

Le variateur 37 émet une consigne C_{MOD1}, directement issue de la consigne C_{DER1}, à l'intention du module 34 électronique de la première machine électrique 28 et une consigne C_{MOD2}, directement issue de la consigne C_{DER2}, à l'intention du module 36 électronique de la seconde machine électrique 28.

Par ailleurs, l'unité 40 primaire de calcul comporte au moins un module MACC d'analyse du comportement du conducteur et un module MDPF de détermination du point de fonctionnement du groupe motopropulseur 10, qui sont susceptibles, en fonction de la valeur de l'information I_{ACC} représentative de la position de la pédale 42 d'accélérateur du véhicule, d'interagir pour déterminer puis émettre les consignes primaires C_{GMP} et. C_{NMOT}.

Les architectures respectives du module MACC d'analyse du comportement du conducteur et du module MDPF de détermination du point de fonctionnement du groupe motopropulseur 10 pouvant faire l'objet de nombreux modes de mise en oeuvre déjà largement connus de l'état de la technique, celles-ci ne seront pas décrites plus explicitement dans la présente description.

Par ailleurs, l'unité 44 secondaire de commande est asservie aux moyens 26 de dérivation de puissance.

A cet effet, dans le premier mode de réalisation qui est représenté à la figure 1, le variateur 35 est susceptible de transmettre à l'unité 44 secondaire de commande des informations I_{28/30} représentatives des couple et vitesse réels des première et seconde machine électriques 28, 30 pour réaliser l'asservissement de l'unité 44 secondaire de commande.

Dans le second mode de réalisation qui est représenté à la figure 2, chaque machine électrique 28 ou 30 est susceptible d'émettre directement à l'intention de l'unité 44 secondaire de commande une information respective I₂₈ et I₃₀ représentative des couple et vitesse réels la concernant pour réaliser l'asservissement de l'unité 44 secondaire de commande.

Par ailleurs, dans ce second mode de réalisation, la capacité 32 est susceptible d'émettre directement à l'intention de l'unité 44 secondaire de commande une information I₃₂ représentative de la tension et/ou de l'intensité établie dans la capacité 32 pour réaliser l'asservissement de l'unité 44 secondaire de commande.

D'autre part, la consigne secondaire de couple C_{MOT} qu'émet l'unité 44 secondaire de commande à l'intention du moteur 14 est transmise à un module 46 de gestion du moteur qui la transmet sous une forme appropriée au moteur 14. De manière non limitative de l'invention, cette consigne de couple C_{MOT} peut comporter une consigne d'allumage et/ou une consigne d'alimentation en carburant du moteur 14.

L'invention trouve de préférence à s'appliquer à tout type de groupe motopropulseur 10 dit "à dérivation de puissance" et notamment à ceux pour lesquels les moyens 24 de réduction à engrenages comportent au moins un train épicycloïdal. Elle permet donc de définir une gestion de type "multivariables" des moyens de commande du groupe motopropulseur, qui permet d'optimiser le fonctionnement des machines électriques 28 et 30 et par conséquent de réduire la taille de la capacité 32 qui ne joue plus, par rapport à une capacité d'un groupe motopropulseur conventionnel qu'un rôle de capacité 32 "tampon" assurant une régulation instantanée des tensions et intensités établies dans les machines électriques 28, 30.

## Revendications

1. Groupe motopropulseur (10) de véhicule automobile, du type qui comporte un moteur thermique (12) entraînant au moins une roue (14) du véhicule par l'intermédiaire d'une transmission (16) à dérivation de puissance qui comporte :
- un arbre d'entrée (18) accouplé au moteur (12) du véhicule,
- un arbre de sortie (20) entraînant un pont (22) lié en rotation aux roues (14),
- des moyens (24) de réduction à engrenages interposés entre l'arbre d'entrée (18) et l'arbre de sortie (20) de la transmission (16), et
- des moyens (26) de dérivation de puissance, interposés entre l'arbre d'entrée (18) et l'arbre de sortie (20) de la transmission (16) parallèlement aux moyens (24) de réduction à engrenages, qui comportent une première machine électrique (28), liée mécaniquement en rotation à l'arbre d'entrée (18) et une seconde machine électrique (30) liée mécaniquement en rotation à l'arbre de sortie (20), qui sont reliées électriquement par l'intermédiaire d'une capacité (32) et d'au moins un variateur (35, 37, 39), et
- des moyens (38) de commande
**caractérisé en ce que** les moyens (38) de commande sont des moyens de commande à deux niveaux primaire et secondaire, qui comportent une unité (40) primaire de calcul, qui est susceptible, au moins en réponse à une information (I_{ACC}) représentative de la position d'une pédale (42) d'accélérateur du véhicule, d'émettre au moins une consigne (C_{GMP}) primaire du couple fourni par le groupe motopropulseur (10) et une consigne primaire (C_{NMOT}) du régime du moteur (12) à l'intention d'une unité (44) secondaire de commande qui est susceptible d'émettre une consigne secondaire (C_{MOT}) de couple à l'intention du moteur (12) et au moins une consigne secondaire de pilotage à l'intention des moyens (26) de dérivation de puissance, de manière à satisfaire aux consignes primaires (C_{GMP}, C_{NMOT}).

2. Groupe motopropulseur (10) selon la revendication précédente, **caractérisé en ce que** l'unité primaire (40) de calcul comporte au moins un module (MACC) d'analyse du comportement du conducteur et un module (MDPF) de détermination du point de fonctionnement du groupe motopropulseur (10).

3. Groupe motopropulseur (10) selon l'une des revendications précédentes, **caractérisé en ce que** l'unité secondaire (44) de commande est asservie aux moyens (26) de dérivation de puissance.

4. Groupe motopropulseur (10) selon la revendication précédente, **caractérisé en ce que** la consigne secondaire de pilotage qu'émet l'unité secondaire (44) de commande à l'intention des moyens (26) de dérivation de puissance comporte une consigne (C_{DER}) de pilotage d'un variateur (35) unique interposé entre les première et seconde machines électriques (28, 30).

5. Groupe motopropulseur (10) selon la revendication précédente, **caractérisé en ce que** le variateur (35) est susceptible de transmettre à l'unité (44) secondaire de commande des informations (I_{28/30}) représentatives des couple et vitesse réels des première et seconde machine électriques (28, 30) pour réaliser l'asservissement de l'unité secondaire (44) de commande.

6. Groupe motopropulseur (10) selon la revendication 3, **caractérisé en ce que** la consigne secondaire de pilotage qu'émet l'unité (44) secondaire de commande à l'intention des moyens (26) de dérivation de puissance comporte une première consigne (C_{DER1}) de pilotage d'un premier variateur (37) associé à la première machine électrique (28) et une seconde consigne (C_{DER2}) de pilotage d'un second variateur (39) associé à la seconde machine électrique (30).

7. Groupe motopropulseur (10) selon la revendication précédente, **caractérisé en ce que** chaque machine électrique (28, 30) est susceptible d'émettre directement à l'intention de l'unité secondaire de commande une information (I₂₈, I₃₀) représentative des couple et vitesse réels la concernant pour réaliser l'asservissement de l'unité secondaire (44) de commande.

8. Groupe motopropulseur (10) selon l'une des revendications 6 ou 7, **caractérisé en ce que** la capacité (32) est susceptible d'émettre directement à l'intention de l'unité (44) secondaire de commande une information (I₃₂) représentative de la tension et/ou de l'intensité établie dans la capacité (32) pour réaliser l'asservissement de l'unité secondaire (44) de commande.

9. Groupe motopropulseur (10) selon l'une quelconque des revendications précédentes, **caractérisé en ce que** la consigne (C_{MOT}) secondaire de couple qu'émet l'unité secondaire (44) de commande à l'intention du moteur (12) comporte une consigne d'allumage et/ou une consigne d'alimentation en carburant.

10. Groupe motopropulseur (10) selon l'une quelconque des revendications précédentes, **caractérisé en ce que** les moyens (24) de réduction à engrenages comportent au moins un train épicycloïdal.

## Claims

1. An automobile vehicle drive power unit (10) of the type comprising an internal combustion engine (12) driving at least one wheel (14) of the vehicle by means of a power shunt transmission (16) which comprises:
- an input shaft (18) coupled to the vehicle engine (12),
- an output shaft (20) driving an axle (22) connected in rotation to the wheels (14),
- gear reduction means (24) interposed between the input shaft (18) and the output shaft (20) of the transmission (16),
- power shunt means (26) interposed between the input shaft (18) and the output shaft (20) of the transmission (16) parallel to the gear reduction means (24), which comprise a first electric machine (28) connected mechanically in rotation to the input shaft (18), and a second electric machine (30) connected mechanically in rotation to the output shaft (20), which are connected electrically by means of a capacitor (32) and at least one variator (35, 37, 39), and
- control means (38),
**characterised in that** the control means (38) are two-level primary and secondary control means which comprise a primary computer unit (40) which may, at least in response to a datum (I_{ACC}) representative of the position of an accelerator pedal (42) of the vehicle, transmit at least one primary reference (C_{GMP}) for the torque supplied by the drive power unit (10) and a primary reference (C_{NMOT}) for the speed of the engine (12) to a secondary control unit (44) which may transmit a secondary torque reference (C_{MOT}) to the engine (12) and at least one secondary control reference to the power shunt means (26), in order to satisfy the primary references (C_{GMP}, C_{NMOT}).

2. A drive power unit (10) as claimed in the preceding claim, **characterised in that** the primary computer unit (40) comprises at least one module (MACC) for analysing the driver's behaviour and a module (MDPF) for calculating the point of operation of the drive power unit (10).

3. A drive power unit (10) as claimed in one of the preceding claims, **characterised in that** the secondary control unit (44) is controlled by the power shunt means (26).

4. A drive power unit (10) as claimed in the preceding claim, **characterised in that** the secondary control reference transmitted by the secondary control unit (44) to the power shunt means (26) comprises a control reference (C_{DER}) for a single variator (35) interposed between the first and second electric machines (28, 30).

5. A drive power unit (10) as claimed in the preceding claim, **characterised in that** the variator (35) may transmit data (I_{28/30}) representative of the actual torque and speed of the first and second electric machines (28, 30) to the secondary control unit (44) in order to achieve the control of the secondary control unit (44).

6. A drive power unit (10) as claimed in claim 3, **characterised in that** the secondary control reference transmitted by the secondary control unit (44) to the power shunt means (26) comprises a first control reference (C_{DER1}) for a first variator (37) associated with the first electric machine (28) and a second control reference (C_{DER2}) for a second variator (39) associated with the second electric machine (30).

7. A drive power unit (10) as claimed in the preceding claim, **characterised in that** each electric machine (28, 30) may directly transmit a datum (I₂₈, I₃₀) representative of the actual torque and speed concerning them to the secondary control unit in order to achieve the control of the secondary control unit (44).

8. A drive power unit (10) as claimed in one of claims 6 or 7, **characterised in that** the capacitor (32) is able directly to transmit a datum (I₃₂) representative of the voltage and/or the intensity established in the capacitor (32) to the secondary control unit (44) in order to achieve the control of the secondary control unit (44).

9. A drive power unit (10) as claimed in any one of the preceding claims, **characterised in that** the secondary torque reference (C_{MOT}) transmitted by the secondary control unit (44) to the engine (12) comprises an ignition reference and/or a fuel supply reference.

10. A drive power unit (10) as claimed in any one of the preceding claims, **characterised in that** the gear reduction means (24) comprise at least one planetary gear set.

## Patentansprüche

1. Kraftfahrzeugantriebsgruppe (10) von dem Typ, welcher einen thermischen Motor (12) umfasst, welcher wenigstens ein Rad (14) des Fahrzeugs mittels eines Getriebes (16) mit Kraftableitung mit sich zieht, welche umfasst:
- eine Eingangswelle (18), welche an dem Motor (12) des Fahrzeugs angekoppelt ist,
- eine Ausgangswelle (20), welche eine Brücke (22) mit sich zieht, verbunden in Rotation mit Rädern (14),
- Mittel (24) zur Reduktion mit Räderwerk, welche zwischen die Eingangswelle (18) und die Ausgangswelle (20) des Gebtriebes (16) eingebracht sind, und
- Mittel (26) zur Leistungsableitung, welche zwischen die Eingangswelle (18) und die Ausgangswelle (20) des Getriebes (16) parallel zu den Mitteln (24) zur Reduktion mit Räderwerk eingebracht sind, welche eine erste elektrische Maschine (28), mechanisch in Rotation mit der Eingangswelle (18) verbunden, und eine zweite elektrische Maschine (30) umfassen, mechanisch in Rotation mit der Ausgangswelle (20) verbunden, welche elektrisch mittels einer Kapazität (32) und wenigstens einem Variator (35, 37, 39) verbunden sind, und
- Steuermittel (38),
**dadurch gekennzeichnet, dass** die Steuermittel (38) Mittel zur Steuerung mit zwei Niveaus, primär und sekundär, sind, welche eine primäre Recheneinheit (40) umfassen, die geeignet ist, wenigstens in Antwort auf eine Information (I_{ACC}), welche anzeigend für die Position eines Gaspedals (42) des Fahrzeugs ist, wenigstens eine primäre Anweisung (C_{GMP}) des Drehmoments, das durch die Antriebsgruppe (10) geliefert wird, und eine primäre Anweisung (C_{NMOT}) der Drehzahl des Motors (12), gerichtet an eine sekundäre Steuereinheit (44) auszugeben, die geeignet ist, eine sekundäre Anweisung (C_{MOT}) des Drehmoments gerichtet an den Motor (12) und wenigstens eine sekundäre Steueranweisung gerichtet an die Mittel (26) zur Leistungsableitung abzugeben, derart, dass die primären Anweisungen (C_{GMP}, C_{NMOT}) erfüllt werden.

2. Antriebsgruppe (10) gemäß dem vorhergehenden Anspruch, **dadurch gekennzeichnet, dass** die primäre Recheneinheit (40) wenigstens ein Modul (MACC) der Analyse des Verhaltens des Fahrers und ein Modul (MDPF) der Bestimmung des Betriebspunkts der Antriebsgruppe (10) umfasst.

3. Antriebsgruppe (10) gemäß einem der vorhergehenden Ansprüche, **dadurch gekennzeichnet, dass** die sekundäre Steuereinheit durch Mittel (26) der Leistungsableitung gesteuert wird.

4. Antriebsgruppe (10) gemäß dem vorhergehenden Anspruch, **dadurch gekennzeichnet, dass** die sekundäre Steueranweisung, welche die sekundäre Steuereinheit (44) an die Mittel (26) zur Leistungsableitung gerichtet abgibt, eine Anweisung (C_{DER}) zur Steuerung eines einzigen Variators (35) ausgibt, der zwischen die ersten und zweiten elektrischen Maschinen (28, 30) eingebracht ist.

5. Antriebsgruppe (10) gemäß dem vorhergehenden Anspruch, **dadurch gekennzeichnet, dass** der Variator (35) geeignet ist, an die sekundäre Steuereinheit (44) Information (I_{28/30}) zu übertragen, welche anzeigend für die reelle Drehzahl und Geschwindigkeit der ersten und zweiten elektrischen Maschinen (28, 30) ist, um die Regelung der sekundären Steuereinheit (44) zu verwirklichen.

6. Antriebsgruppe (10) nach Anspruch 3, **dadurch gekennzeichnet, dass** die sekundäre Steueranweisung, welche die sekundäre Steuereinheit (44) an die Mittel (26) zur Leistungsableitung gerichtet ausgibt, eine erste Anweisung (C_{DER1}) der Steuerung eines ersten Variators (37), welcher der ersten elektrischen Maschine (28) zugeordnet ist, und eine zweite Anweisung (C_{DER2}) der Steuerung eines zweiten Variators (39), welcher der zweiten elektrischen Maschine (30) zugeordnet ist, umfasst.

7. Antriebsgruppe (10) nach dem vorhergehenden Anspruch, **dadurch gekennzeichnet, dass** jede elektrische Maschine (28, 30) geeignet ist, direkt an die sekundäre Steuereinheit gerichtet eine Information (I₂₈, I₃₀) auszugeben, welche repräsentativ für die tatsächliche Drehzahl und die tatsächliche Geschwindigkeit sind, die sie betreffen, um die Regelung der sekundären Steuereinheit (44) zu verwirklichen.

8. Antriebsgruppe (10) nach einem der Ansprüche 6 oder 7, **dadurch gekennzeichnet, dass** die Kapazität (32) geeignet ist, direkt an die sekundäre Steuereinheit (44) gerichtet eine Information (I₃₂) auszugeben, welche anzeigend für die Spannung und/oder die Stärke ist, die in der Kapazität (32) verwirklicht ist, um die Regelung der sekundären Steuereinheit (44) zu verwirklichen.

9. Antriebsgruppe (10) nach einem der vorhergehenden Ansprüche, **dadurch gekennzeichnet, dass** die sekundäre Anweisung (C_{MOT}) der Drehzahl, welche die sekundäre Steuereinheit an den Motor (12) gerichtet ausgibt, eine Zündanweisung und/oder eine Kraftstoff-Versorgungsanweisung umfasst.

10. Antriebsgruppe (10) nach einem der vorhergehenden Ansprüche, **dadurch gekennzeichnet, dass** die Mittel (24) zur Reduktion mit Räderwerk wenigstens einen Umlaufgetriebezug umfassen.
